(19) Europäisches Patentamt
European Patent Office
Office européen des brevets

(11) Publication number: 0 248 922 B1

(12) **EUROPEAN PATENT SPECIFICATION**

(45) Date of publication of the patent specification: **12.09.90**

(51) Int. Cl.[5]: **B01D 53/04**, C01B 13/02

(21) Application number: **86107820.2**

(22) Date of filing: **09.06.86**

(54) **Process for producing oxygen-enriched gas.**

(43) Date of publication of application: **16.12.87 Bulletin 87/51**

(45) Publication of the grant of the patent: **12.09.90 Bulletin 90/37**

(84) Designated Contracting States: **DE FR GB**

(56) References cited:
**EP-A- 0 163 242**
**FR-A- 2 239 277**

(73) Proprietor: **SUMITOMO SEIKA CHEMICALS CO., LTD., 346-1, Miyanishi Harimacho, Kako-gun, Hyogo-ken(JP)**

(72) Inventor: **Haruna, Kazuo, 130-10, Kuchiri, Onouecho Kakogawa-shi(JP)**
Inventor: **Ueda, Kanji, 9-1, Sanjominamicho, Ashiya-shi(JP)**
Inventor: **Uno, Masaru, 849-1, Nishifutami, Futamicho Akashi-shi(JP)**

(74) Representative: **Eitle, Werner, Dipl.-Ing. et al, Hoffmann, Eitle & Partner Patentanwälte Arabellastrasse 4, D-8000 München 81(DE)**

**EP 0 248 922 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to a process for producing an oxygen enriched gas from a mixed gas, particularly air, containing oxygen and nitrogen as main gas components by pressure swing adsorption.

An oxygen-enriched gas obtained by pressure swing adsorption can be easily and continuously supplied and at low costs to industries requiring continous supply of a large amount of an oxygen-rich gas, particularly steel manufacture using an electric furnace, oxygen aeration for water treatment, pulp bleaching, etc. Thus, the oxygen-enriched gas is more and more widely utilized.

In the conventional process for producing an oxygen-enriched gas by pressure swing adsorption, a pressure equalization step is provided as a means of enhancing the oxygen recovery rate, wherein a lower pressure column which has completed desorption and a higher pressure column which has completed adsorption are connected to each other to transfer the gas remaining in the higher pressure column to the lower pressure column until the pressures in the two columns are equalized, whereby a gas having a higher oxygen concentration than that of the feed gas is recovered (US-A 3 738 087 and 3 923 477).

However, since the gas recovery is conducted until the pressures of the two columns become completely equal to each other, the transferred gas inevitably contains a large amount of nitrogen gas. Although the oxygen recovery rate is improved, the oxygen concentration of the producted oxygen-enriched gas is lowered. Thus, it has been desired to overcome the reduction of oxygen concentration of the product gas by pressure equalization.

### SUMMARY OF THE INVENTION

The present inventors have made extensive studies to overcome the said problem inherent to the conventional process and have found that an oxygen-enriched gas can be obtained at a high oxygen recovery rate by transfering the oxygen-enriched gas remaining in a column which has completed adsorption under a substantially atmospheric pressure to another column which has completed desorption under a vacuum pressure in a time as short as possible to recover the remaining oxygen-enriched gas. The present inventors have further found that the gas transfer time for the remaining gas recovery should be so shortened and also the gas recovery volume should be limited as to keep the nitrogen gas content in the recovered gas as low as possible. When influences of gas flow on a packed bed, such as fluidization of packed bed, are taken into consideration, the gas recovery time should be about 5 seconds. The recovery gas volume is limited because it is necessary to prevent the nitrogen gas desorbed from the zeolite molecular sieve in the column which has completed adsorption from transfer to the other column, which has completed desorption.

The present invention provides a process for producing an oxygen-enriched gas from a gas mixture containing oxygen and nitrogen as main gas components by pressure swing adsorption, using a set of three adsorption columns, each packed with a zeolite molecular sieve as adsorbent, carrying through adsorption under a pressure between atmospheric pressure and an overpressure of $4.90 \cdot 10^4$ (5000 mm $H_2O$) and desorption under a vacuum pressure down to the final pressure of $1.99 \cdot 10^4$ Pa (150 mm Hg absolute), which comprises passing the gas mixture through a first adsorption column, thereby adsorbing substantially the other gas components except the oxygen gas, while bringing a third adsorption column which has completed adsorption into a vacuum pressure through the inlet thereof, thereby desorbing the adsorbed gas components in the third adsorption column and withdrawing the resulting desorbed gas components through the inlet thereof, while simultaneously connecting the outlet of the third adsorption column to the outlet of a second adsorption column which has completed desorption thereby transferring the oxygen-enriched gas remaining in the third adsorption column to the second adsorption column; discontinuing the remaining gas transfer before the pressure of the third adsorption column becomes equal to that of the second adsorption column, while continuing the desorption of the third adsorption column through the inlet; initiating to fill a part of the oxygen-enriched product gas into the second adsorption column through the outlet at the discontinuation of the remaining gas transfer, and repeating the foregoing operations for each column successively.

The present invention will be explained in more detail below. A zeolite molecular sieve of Å in average micro-pore size having a strong adsorbability for nitrogen is packed in each of the three adsorption columns. A gas mixture containing oxygen and nitrogen as main gas components is allowed to pass through a first adsorption column under a pressure slightly higher than the atmospheric pressure, for example, from the atmospheric pressure to an overpressure of $4.90 \cdot 10^4$ Pa (5000 mm $H_2O$) and an oxygen-enriched product gas is obtained from the outlet of the first adsorption column. After the adsorption has been completed, the oxygen-enriched gas remaining in the first adsorption column is recovered at the initial stage of the desorption step by connecting the outlet of the first adsorption column to the outlet of a second adsorption column which has completed desorption, that is, regeneration, and whose pressure is vacuum, because the desorption is conducted under a vacuum pressure down to the final pressure of $1.99 \cdot 10^4$ Pa (150 mm Hg absolute), whereby for recovery the oxygen-enriched gas remaining in the upper part of the first adsorption column is transferred into the second adsorption column being under vacuum pressure. In this case, it is essential that the first adsorption column from which the remaining oxygen-enriched gas is transferred simultaneously starts desorption through the inlet thereof contercurrent to the direction of the gas mixture during adsorption, because the nitrogen gas desorbed from the zeolite molecular sieve must be prevented from breaking through the first adsorption column. Furthermore it is essential to discontinue transfer of the oxygen-enriched gas remaining in the first adsorption column after adsorption was stopped to the second adsorption column, before the nitrogen desorbed from the first adsorption column penetrates the second adsorption column. Usually, the transfer should be discontinued when the pressure difference between these two columns reaches $1.33 \cdot 10^4$ Pa to $5.32 \cdot 10^4$ Pa (100 to 400 mm Hg), preferably $2.66 \cdot 10^4$ Pa to $3.99 \cdot 10^4$ Pa (200 to 300 mm Hg). The transfer time for the recovery is preferably as short as possible, for example, about 5 sec. When the pressure difference between these two columns is smaller than $1.33 \cdot 10^4$ Pa (100 mm Hg), a large amount of the nitrogen desorbed from the molecular sieve in the first adsorption column is transferred to the second adsorption column together with the recovered oxygen-enriched gas, and consequently the product oxygenenriched gas will have an increased nitrogen content. As a result, the volume of oxygen in the oxygen-enriched gas is decreased, and the oxygen recovery rate is consequently lowered. On the other hand, when the pressure difference between these two columns is larger than $5.32 \cdot 10^4$ Pa (400 mm Hg), the quantity of the transferred remaining oxygen-enriched gas becomes smaller, and the oxygen recovery rate will be lowered. The oxygen recovery rate refers to a percentage by volume of pure oxygen volume in product gas to that in mixed gas. Even after the recovery the first adsorption column is still under continuous desorption, that is, regeneration, and the second adsorption column which has received the remaining oxygen-enriched gas from the first adsorption column is filled through the outlet thereof with the oxygen-enriched product gas until the pressure of the second adsorption column reaches substantially the atmospheric pressure. The second adsorption column is made ready thereby for the successive adsorption step. During these operations, a third adsorption column is under adsorption. Adsorption, desorption and filling are repeated in this manner for each column successively, whereby an oxygen-enriched gas can be produced through pressure swing adsorption.

## BRIEF DESCRIPTION OF THE DRAWINGS

Fig. 1 shows an operational sequence according to the present process, based on a system shown in Fig. 2.

Fig. 2 is a schematic flow diagram of a system for conducting the present process.

## DETAILED DESCRIPTION OF THE INVENTION

Reference is now made to Figs. 1 and 2 which illustrate an operational sequence of the present process and a system for conducting the present process, respectively.

In Fig. 1 each operation of adsorption, desorption and filling is conducted for 53 to 80 sec and one cycle of the adsorption, desorption and filling is finished within 159 to 240 sec. in three adsorption columns $D_1$, $D_2$ and $D_3$, each packed with zeolite molecular sieve. In Fig. 2 a gas mixture containing oxygen and nitrogen as main gas components is compressed to a pressure ranging from the atmospheric pressure to an overpressure of $4.90 \; . \; 10^4$ Pa (5000 mm $H_2O$) by a blower A, and introduced into the first adsorption column $D_1$ through a valve 1. The nitrogen gas is adsorbed in the first adsorption column $D_1$ and removed from the gas mixture, and an oxygen-enriched product gas leaves the first adsorption column $D_1$ through valve 7 and is stored in a product tank C. The second adsorption column $D_2$ which has completed desorption by opening valve 11 receives through valves 15 and 17 an oxygen-enriched gas from the upper part of the third adsorption column $D_3$ which has completed adsorption. This gas transfer is discontinued when the pressure difference between the third adsorption column $D_3$ and the second adsorption column $D_2$ reaches from 1.33 · 104 Pa to $5.32 \cdot 10^4$ Pa (100 to 400 mm Hg). Usually the gas transfer time is 3 to 7 sec. During this gas transfer, valve 17 works as a restriction valve to prevent a rapid transfer of the remaining gas while valve 16 is closed to prevent any back flow of the product oxygen-enriched gas from the product tank C. During the gas transfer, valve 6 is opened and the adsorbed nitrogen gas is desorbed from the third adsorption column $D_3$ and withdrawn from the third adsorption column $D_3$ by means of a vacuum pump B. From the third adsorption column $D_3$, the remaining oxygen-enriched gas is transferred through the outlet, whereas the desorbed nitrogen gas is withdrawn through the inlet contercurrent to the flow direction of the gas mixture during adsorption. The second adsorption column $D_2$ which has received the remaining oxygen-enriched gas from the third adsorption column $D_3$ for 3 to 7 sec now receives a oxygen-enriched product gas from the product tank C through valve 18 at a constant flow rate unit it is filled by oxygen-enriched gas so as to finally obtain the adsorption pressure. The second adsorption column $D_2$ is so made ready for the successive adsorption step. In this way, the first step is complete. The same operations are repeated one adsorption column after another to form one cycle of the first to the third step during from 159 to 240 sec.

The valve 17 is manually used for restriction of gas flow rate at the recovery, and the valve 18 is used for automatically controlling the filling gas flow rate at the filling.

## Example

In an apparatus shown in Fig. 2 with the operational sequence shown in Fig. 1, tests for producing an oxygen-enriched gas from air were conducted for 180 sec/cycle. Three adsorption columns $D_1$, $D_2$, and $D_3$, each 65 mm in diameter and 600 mm in height and packed with 5 Å zeolite molecular sieve manufactured by Bayer AG, West Germany, were used. The outlet of the third adsorption column $D_3$

which had completed adsorption by supplying air for 60 sec under a pressure of $4.90 \cdot 10^3$ Pa (500 mm $H_2O$) in order was connected for 5 sec with the outlet of the second adsorption column $D_2$ which had completed desorption under the final pressure of $1{,}99 \cdot 10^4$ Pa (150 mm Hg absolute), by using a vacuum pump B for 60 sec to recover the oxygen-enriched gas remaining in the column $D_3$.

When the oxygen-enriched gas recovery was conducted until a pressure difference between the two columns $D_2$ and D became substantially 0 after 5 sec, that is, without any restriction to the quantity of remaining oxygen-enriched gas to be transferred, the pressures in the two columns $D_2$ and $D_3$ became substantially equally $5.47 \cdot 10^4$ Pa (410 mm Hg) and an oxygen-enriched gas having an oxygen concentration of 93% by volume was obtained. The product oxygen-enriched gas was obtained at 33 N1/h at 41% oxygen recovery rate and 358 Nl/h air flow rate.

On the other hand, when the oxygen recovery was conducted with restriction on the quantity of the remaining oxygen-enriched gas to be transferred so that the column $D_3$ which had completed adsorption had a pressure of $4.13 \cdot 10^4$ Pa (310 mm Hg) and the column $D_2$which had completed desorption had a pressure of $6.40 \cdot 10^4$ Pa (480 mm Hg), and the pressure difference between these columns became $2.27 \cdot 10^4$ Pa (170 mm Hg), 46.5 N1/h of oxygen-enriched product gas having the same oxygen concentration of 93% by volume were obtained at 47% oxygen recovery rate and 440 Nl/hr air inflow rate.

From the above test, it can be seen that by providing an appropriate pressure difference between the two connected adsorption columns in the remaining oxygen-enriched gas transfer, even though the same amount of the zeolite is packed, a oxygen-enriched product gas having the same oxygen concentration of 93% by volume can be obtained at 47% oxygen recovery rate which is by 6% higher than the 41% obtained without said pressure difference. Accordingly, the present invention can provide an oxygen-enriched gas of a high oxygen recovery rate. For example, an oxygen-enriched gas containing 93% by volume of oxygen can be obtained from air at a high oxygen recovery rate of 47%.

## Claims

1. A process for producing an oxygen-enriched gas from a gas mixture containing oxygen and nitrogen as main gas components by pressure swing adsorption, using a set of three adsorption columns, each packed with a zeolite molecular sieve as adsorbent, carrying through adsorption under a pressure between athmoshperic pressure and an overpressure of $4.90 \cdot 10^4$ Pa (5000 mm $H_2O$) and desorption under a vacuum pressure down to the final pressure of $1.99 \cdot 10^4$ Pa (150 mm Hg absolute), which comprises passing the gas mixture through a first adsorption column, thereby adsorbing substantially the other gas components except the oxygen gas, while bringing a third adsorption column which has completed adsorption into a vacuum pressure through the inlet thereof, thereby desorbing the adsorbed gas components in the third adsorption column and withdrawing the resulting desorbed gas components through the inlet thereof, while simultaneously connecting the outlet of the third adsorption column to the outlet of a second adsorption column which has completed desorption thereby transferring the oxygen-enriched gas remaining in the third adsorption column to the second adsorption column; discontinuing the remaining gas transfer before the pressure of the third adsorption column becomes equal to that of the second adsorption column, while continuing the desorption of the third adsorption column through the inlet; initiating to fill a part of the oxygen-enriched product gas into the second adsorption column through the outlet at the discontinuation of the remaining gas transfer, and repeating the foregoing operations for each column successively.

2. A process according to claim 1, wherein the remaining oxygen-enriched gas transfer is discontinued when the pressure difference between the third adsorption column and the second adsorption column reaches from $1.33 \cdot 10^4$ Pa to to $5.32 \cdot 10^4$ Pa (100 mm Hg to 400 mm Hg).

3. A process according to claim 1, wherein the gas mixture is air.

4. A process according to claim 1, wherein the zeolite molecular sieve has an average micro-pore size of 5 Å.

## Patentansprüche

1. Verfahren zur Herstellung eines mit Sauerstoff angereicherten Gases aus einer Gasmischung, die Sauerstoff und Stickstoff als Hauptgaskomponenten enthält, durch Druckschwingadsorption, wobei man einen Satz aus drei Adsorptionssäulen verwendet, die jeweils mit einem Zeolith-Molekularsieb als Adsorbens gepackt sind, und wobei man die Adsorption unter einem Druck zwischen Atmosphärendruck und einem Überdruck von $4{,}90 \cdot 10^4$ Pa (5000 mm $H_2O$) durchführt, und durch Desorption unter einem Vakuumdruck herab bis zu dem Enddruck von $1{,}99 \cdot 10^4$ Pa (150 mm Hg absolut), das die Schritte des Fliessens der Gasmischung durch eine erste Adsorptionssäule, wobei hierbei im wesentlichen die anderen Gaskomponenten ausser dem Sauerstoffgas adsorbiert werden, während man eine dritte Adsorptionssäule, die die Adsorption vervollständigt hat, über den Einlass davon unter einen Vakuumdruck setzt, wobei die adsorbierten Gaskomponenten in der dritten Adsorptionssäule desorbiert werden und wobei die erhaltenen, desorbierten Gaskomponenten durch den Einlass abgezogen werden, während man gleichzeitig den Auslass der dritten Adsorptionssäule mit dem Auslass einer zweiten Adsorptionssäule, die die Desorption vervollständigt hat, verbindet und man damit das mit Sauerstoff angereicherte Gas, das in der dritten Adsorptionssäule verblieben ist, zu der zweiten Adsorptionssäule überführt; des Unterbrechens des Transfers des verbliebenen Gases, bevor der Druck der dritten Adsorptionssäule gleich dem der zweiten Adsorptionssäule wird, während man die Desorption der dritten Adsorptionssäule durch den Einlass fortsetzt; des Startens des Füllens eines Teils des mit Sauerstoff angereicherten Produktgases in die zweite Adsorptionssäule durch den Auslass bei Unterbrechung des Transfers des verbliebenen Gases, und des hintereinander Wiederholens der vorhergehenden Verfahrensschritte für jede Säule, umfasst.

2. Verfahren nach Anspruch 1, wobei der Transfer des verbliebenen, mit Sauerstoff angereicherten Gases unterbrochen wird, wenn die Druckdifferenz zwischen der dritten Adsorptionssäule und der zweiten Adsorptionssäule 1,33 · $10^4$ Pa bis 5,32 · $10^4$ Pa (100 bis 400 mm Hg) erreicht.

3. Verfahren nach Anspruch 1, wobei die Gasmischung Luft ist.

4. Verfahren nach Anspruch 1, wobei das Zeolith-Molekularsieb eine durchschnittliche Mikroporengrösse von 5 Angström aufweist.

**Revendications**

1. Procédé de production d'un gaz enrichi en oxygène à partir d'un mélange gazeux contenant de l'oxygène et de l'azote comme composants gazeux principaux par adsorption par oscillation de pression, à l'aide d'une série de trois colonnes d'adsorption, garnies chacune d'un tamis moléculaire zéolitique en tant qu'adsorbant, par adsorption sous une pression comprise entre la pression atmosphérique et une surpression de 4,90 · $10^4$ Pa (5000 mm $H_2O$) et désorption sous un vide jusqu'à la pression finale de 1, 99 · $10^4$ Pa (150 mm Hg absolus), qui comprend le passage du mélange gazeux dans une première colonne d'adsorption, pour adsorber ainsi sensiblement les autres composants gazeux sauf l'oxygène, tout en mettant sous vide par son entrée une troisième colonne d'adsorption qui a terminé l'adsorption, pour désorber ainsi les composants gazeux adsorbés dans la troisième colonne d'adsorption et retirer les composants gazeux désorbés résultants par son entrée, en reliant simultanément la sortie de la troisième colonne d'adsorption à la sortie d'une seconde colonne d'adsorption qui a terminé la désorption pour ainsi transférer dans la seconde colonne d'adsorption le gaz enrichi en oxygène qui reste dans la troisième colonne d'adsorption; l'interruption du transfert du gaz restant avant que la pression de la troisième colonne d'adsorption ne devienne égale à celle de la seconde colonne d'adsorption, tout en continuant la désorption de la troisième colonne d'adsorption par l'entrée; l'amorçage de l'introduction d'une partie du gaz enrichi en oxygène produit dans la seconde colonne d'adsorption par l'entrée lors de l'interruption du transfert du gaz restant, et la répétition des opérations précédentes pour chaque colonne successivement.

2. Procédé selon la revendication 1, dans lequel le transfert du gaz enrichi en oxygène restant est interrompu lorsque la différence de pression entre la troisième colonne d'adsorption et la seconde colonne d'adsorption atteint 1,33 · $10^4$ Pa à 5,32 · $10^4$ Pa (100 mm Hg à 400 mm Hg).

3. Procédé selon la revendication 1, dans lequel le mélange gazeux est l'air.

4. Procédé selon la revendication 1, dans lequel le tamis moléculaire zéolitique a une taille moyenne de micropores de 5 Å.

F I G. 1

| STEP / TIME / VALVE NO. | ONE CYCLE | | | | | |
|---|---|---|---|---|---|---|
| | 1st STEP | | 2nd STEP | | 3rd STEP | |
| | 3 ~ 10 sec | 50 ~ 70sec | 3 ~ 10 sec | 50 ~ 70sec | 3 ~ 10 sec | 50 ~ 70sec |
| | | | | | | |
| 1 | ■ | ■ | | | | |
| 2 | | | ■ | ■ | | |
| 3 | | | | | ■ | ■ |
| 4 | | | ■ | ■ | | |
| 5 | | | | | ■ | ■ |
| 6 | ■ | ■ | | | | |
| 7 | ■ | ■ | | | | |
| 8 | | | ■ | ■ | | |
| 9 | | | | | ■ | ■ |
| 10 | | | | | ■ | ■ |
| 11 | ■ | ■ | | | | |
| 12 | | | ■ | ■ | | |
| 13 | | | ■ | | | |
| 14 | | | | | ■ | |
| 15 | ■ | | | | | |
| 16 | | ■ | | ■ | | ■ |
| 1st ADSORPTION COLUMN | ADSORPTION | | RECOVERY | DESORPTION | RECOVERY | FILLING |
| 2nd ADSORPTION COLUMN | RECOVERY | FILLING | ADSORPTION | | RECOVERY | DESORPTION |
| 3rd ADSORPTION COLUMN | RECOVERY | DESORPTION | RECOVERY | FILLING | ADSORPTION | |

■ : OPEN

FIG. 2

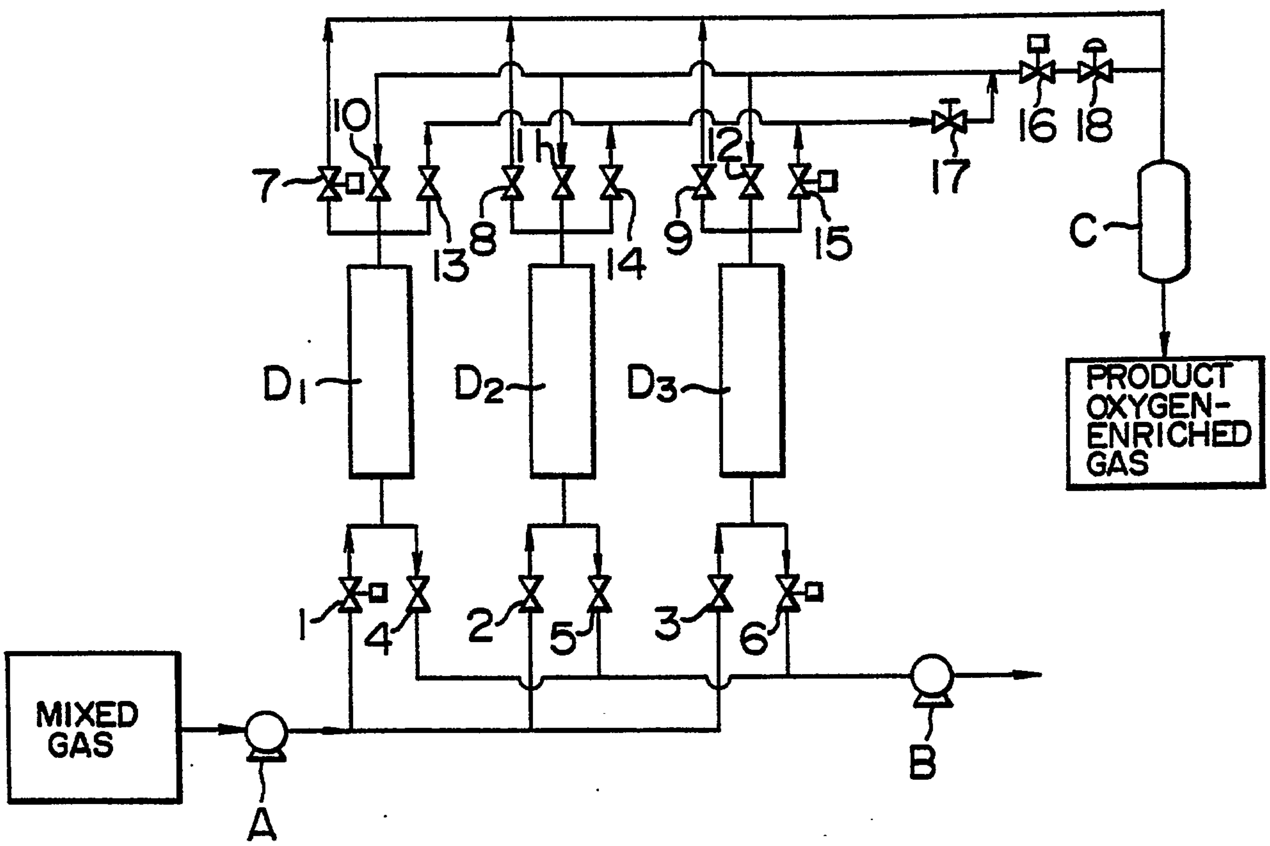

10
7
11
12
13
8
14
9
15
17
16
18
C
PRODUCT OXYGEN-ENRICHED GAS
D1
D2
D3
1
4
2
5
3
6
MIXED GAS
A
B